(19) Europäisches Patentamt
European Patent Office
Office européen des brevets

(11) EP 2 242 790 B1

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(21) Anmeldenummer: **08872461.2**

(22) Anmeldetag: **15.12.2008**

(51) Int Cl.:
***C08G 77/46*** *(2006.01)* ***C08J 9/00*** *(2006.01)*

(86) Internationale Anmeldenummer:
**PCT/EP2008/067500**

(87) Internationale Veröffentlichungsnummer:
**WO 2009/100793 (20.08.2009 Gazette 2009/34)**

(54) **DIE ERFINDUNG BETRIFFT DIE VERWENDUNG VON SCHAUMSTABILISATOREN, DIE AUF BASIS NACHWACHSENDER ROHSTOFFE HERGESTELLT WERDEN, ZUR HERSTELLUNG VON POLYURETHANSCHÄUMEN**

THE INVENTION RELATES TO THE USE OF FOAM STABILIZERS, PRODUCED ON THE BASIS OF SUSTAINABLE RAW MATERIALS, FOR PRODUCING POLYURETHANE FOAMS

UTILISATION, POUR LA FABRICATION DE MOUSSES DE POLYURÉTHANE, DE STABILISATEURS DE MOUSSE FABRIQUÉS À BASE DE MATIÈRES PREMIÈRES RENOUVELABLES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.02.2008 DE 102008000266**

(43) Veröffentlichungstag der Anmeldung:
**27.10.2010 Patentblatt 2010/43**

(73) Patentinhaber: **Evonik Goldschmidt GmbH
45127 Essen (DE)**

(72) Erfinder:
- **HENNING, Frauke
45130 Essen (DE)**
- **KNOTT, Wilfried
45355 Essen (DE)**
- **THUM, Oliver
40880 Ratingen (DE)**
- **SCHILLER, Carsten
45470 Mülheim an der Ruhr (DE)**
- **GLOS, Martin
46325 Borken (DE)**
- **TERHEIDEN, Annegret
47058 Duisburg (DE)**

(56) Entgegenhaltungen:
**EP-A- 0 585 771 US-B1- 6 465 673**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Polyurethane unterschiedlicher Art werden durch die Polymerisation von Diisocyanaten wie 4, 4'-Methylenbis (phenylisocyanat), kurz MDI, oder 2,4-Toluoldiisocyanat, kurz TDI, mit Polyetherpolyolen oder Polyesterpolyolen hergestellt. Die hierbei eingesetzten Polyetherpolyole werden durch die Alkoxylierung von polyhydroxyfunktionellen Startern wie z.B. Glykolen, Glycerin, Trimethylolpropan, Pentaerythrit, Sorbit oder Saccharose gewonnen. Bei der Herstellung von Polyurethanschäumen kommen zusätzliche Treibmittel zum Einsatz, wie z. B. Pentan, Methylenchlorid oder Kohlendioxid. Unerlässlich für die reproduzierbare technische Herstellung von Schaumteilen ist die Stabilisierung des Polyurethanschaums durch ein Tensid. Abseits von wenigen rein organischen Tensiden werden aufgrund ihres höheren Grenzflächenstabilisierungspotentials meist Silicontenside eingesetzt.

Mit Blick auf die langfristig begrenzte Verfügbarkeit fossiler Ressourcen, namentlich Öl, Kohle und Gas, und vor dem Hintergrund steigender Rohölpreise besteht die Notwendigkeit, die Erzeugung chemischer Produkte weitgehend auf die Basis nachwachsender Rohstoffe umzustellen. Wie aus der WO 2005/033167 A2 oder der US 2006/0293400 A1 hervorgeht, können Polyurethanschäume bereits mit Polyolen gefertigt werden, die aus nachwachsenden Rohstoffen, wie beispielsweise Pflanzenölen und -fetten, hergestellt werden. Die Anforderungen an die Leistungsfähigkeit des Schaumstabilisators sind in diesen Systemen insofern höher, als dass die Zusammensetzung und technische Reinheit der Rohstoffe auf Pflanzenbasis größeren Schwankungen unterliegen, als es bei reinen Industrieprodukten der Fall ist. In den zitierten Schriften kommen leistungsfähige Silicontenside, wie beispielsweise Siliconpolyethercopolymere zum Einsatz, die im Markt etabliert sind, wie beispielsweise Tegostab B 2370, Tegostab B 4690 LF, Tegostab B 8681 oder Tegostab B 4351.

Stand der Technik:

Im Stand der Technik ist eine Vielzahl verschiedener Polyurethanschäume beschrieben, beispielsweise Heißweichschaum, Kaltschaum, Esterschaum, PUR-Hartschaum, PIR-Hartschaum uvm. Die hierbei eingesetzten Stabilisatoren sind auf die jeweilige Endanwendung passgenau entwickelt und zeigen üblicherweise eine deutlich veränderte Performance, falls sie zur Herstellung anderer Schaumarten benutzt werden.

Bei der Herstellung von Polyurethan- und Polyisocyanurat-Hartschaumstoffen werden zellstabilisierende Additive eingesetzt, um eine feinzellige, gleichmäßige und störungsarme Schaumstruktur zu erhalten und damit die Gebrauchseigenschaften - besonders das thermische Isolationsvermögen - des Hartschaumstoffes in wesentlichem Maße positiv zu beeinflussen. Auch hier sind Tenside auf der Basis von Polyether-modifizierten Siloxanen besonders effektiv und stellen daher den bevorzugten Typ der Zellstabilisatoren dar. Da es eine Vielzahl verschiedener Hartschaumformulierungen für unterschiedliche Anwendungsgebiete gibt, die individuelle Anforderungen an den Zellstabilisator stellen, werden Polyethersiloxane unterschiedlicher Struktur eingesetzt. In vielen Einsatzgebieten sind Verbesserungen der Zellstabilisatoren gegenüber dem Stand der Technik wünschenswert, um die Gebrauchseigenschaften der Hartschaumstoffe weiter zu optimieren, insbesondere hinsichtlich der Wärmeleitfähigkeit und der Schaumdefekte an der Oberfläche der Schaumstoffe. Weitere bei der Herstellung von Hartschaumstoffen wichtige Kriterien sind die Fließfähigkeit und Volumenausbeute des Schaums bei gegebener Formulierung und Treibmittelmenge. Auch diese Parameter lassen sich durch Wahl eines optimierten Stabilisators positiv beeinflussen. So hat beispielsweise die Wahl des Treibmittels die Entwicklungen neuer, optimierter Stabilisatoren beeinflusst. Während die EP 0570174 A1 noch die Herstellung von Polyurethan-Hartschaum unter Verwendung von Fluorchlorkohlenwasserstoffen beschreibt, geht die weitere Entwicklung über reine Fluorkohlenwasserstoffe als Treibmittel, wie in der EP 0533202 A1 beschrieben bis hin zum heutzutage standardmäßig eingesetzten Treibmittel Pentan, wie in der EP 1544235 A1 beschrieben, hinaus.

Polyurethanweichschäume werden häufig unter Verwendung von Kohlenstoffdioxid als umweltfreundlichem Treibmittel hergestellt. Die EP 0797606 A1 und EP 1501889 A1 beschreiben die für diese Anwendung gebräuchlichen Stabilisatoren. In Ländern mit weniger strikten Umweltauflagen wird dennoch nach wie vor Methylenchlorid als Treibmittel verwendet. Die EP 0694585 A2 beschreibt hier im Einsatz befindliche Stabilisatoren.

Die EP 0930324 A1 beschreibt Trisiloxantenside, die in Kombination mit Schaumstabilisatoren als zellöffnende Cotenside bei der Herstellung von Polyurethanhartschaum und -weichschaum, speziell von Esterschaum auf Basis von Polyesterpolyolen, eingesetzt werden. Die in der EP 0930324 A1 beschriebenen Trisiloxantenside werden hergestellt durch die Umsetzung von Trisiloxan-polyoxyalkenolen mit cyclischen Dicarbonsäureanhydriden, was zu einer endständigen Carbonsäurefunktion oder einem endständigen Carboxylatsalz führt. Ähnliche Strukturen beschreiben die US 3560544 A1, EP 0220697 A2, US 5248783 A1. Die Wirkung der freien, nicht an ein Silicontensid gebundenen Fettsäure wird in der WO 1988002383 A1 beschrieben. Alle in diesen Schriften beschriebenen Strukturen enthalten eine reaktive Gruppe, die in die Urethanmatrix einreagiert und damit die Grenzflächenaktivität des zellöffnenden Cotensids mit fortschreitender Urethanisierungsreaktion herabsetzt. Erst die erfindungsgemäße Verwendung von Trisiloxan-polyoxyalkenolen, die vollständig mit natürlich vorkommenden Fettsäuren verestert sind und über keine mit der Urethanmatrix reagierende funktionelle Gruppe verfügen, gewährleistet die Migrationsfähigkeit des zellöffnenden Cotensids und damit

dessen Wirkung über den gesamten Zeitraum der Polyurethanschaum-Herstellung, jedoch insbesondere zum Zeitpunkt der Zellöffnung.

Die Schriften JP 07070430 B4 und JP 07070550 B4 beschreiben einen 2-Komponenten-Polyurethanschaum, der zur Versiegelung und Verklebung von Bauteilen verwendet wird und der als Stabilisator ein Polyethersiloxan enthält, das auf Basis nur eines Polyethers hergestellt ist und dessen polyether-endständige Hydroxyfunktionen mit einer Fettsäure, wie beispielsweise der dort zitierten Isostearinsäure, verestert sind. Die japanischen Schriften beschränken sich hier auf ein Block-Copolymer, das nur aus zwei Komponenten besteht, nämlich dem Siloxanteil und einem vollständig mit einer Fettsäure endverkapptem Polyether. Die Herstellung und Verwendung von Polyethersiloxanen, die sowohl endverkappte als auch hydroxyfunktionelle Polyether unterschiedlicher Molekulargewichte und unterschiedlicher Polaritäten in einem Block-Copolymer enthalten, ist nicht beschrieben.

Die Veresterung von Allylpolyethern führt bei den klassischen Reaktionsbedingungen, also unter Säurekatalyse und Wasserabscheidung bei hohen Temperaturen, zu unerwünschten Nebenreaktionen, wie beispielsweise dem oxidativen Abbau der Allylpolyether begleitet von Geruchsentwicklung und Verfärbung. Insbesondere ungesättigte Fettsäuren können durch Nebenreaktionen an der Doppelbindung quervernetzen. Hydroxyfunktionelle Polyethersiloxane können ebenfalls nicht nach klassischen Methoden verestert werden, da die Siliconkette unter der Säurekatalyse bei hohen Temperaturen gespalten und abgebaut wird. Die in der US 2007/0021578 A1 beschriebene Methode der enzymatisch katalysierten Veresterung von hydroxyalkylfunktionellen Polysiloxanen ermöglicht zwar eine schonendere Umsetzung ohne unerwünschte Nebenreaktionen und Geruchsbildung, führt jedoch in allen Beispielen nur vollständig veresterte Produkte an, die mit nur wenigen (ein bis zwei) organische Gruppen modifiziert sind. Eine enzymatisch katalysierte Teilveresterung von Polyethersiloxanen oder von mit Hydroxyalkylgruppen modifizierten Siloxanen ist nicht mit der geforderten Rezepturpräzision reproduzierbar durchzuführen, vor allem bei der Verwendung von Siloxanen, die kammständig eine größere Zahl von funktionellen Gruppen trägt. Der Versuch der nachträglichen Teilveresterung kann bis hin zu zweiphasigen Produkten führen, bei denen die vollständig veresterten Anteile vom Produktgemisch separieren (Siehe Beispiel 10). Nach dem bisherigen Stand der Technik sind teilveresterte Polyethersiloxane nur nach dem in der EP 1816154 A1 beschriebenen Verfahren zugänglich (Siehe Beispiel 11).

Aus der EP 0585771 A2 geht hervor, dass die Polysiloxan-Polyoxyalkylen-Blockmischpolymerisate, die besonders leistungsfähige Schaumstabilisatoren darstellen, durch eine nur empirisch zu ermittelnde Kombination aus hydroxyfunktionellen und endverkappten Polyoxyalkylenblöcken unterschiedlichen Molekulargewichts und unterschiedlicher Hydrophilie bzw. Lipophilie gekennzeichnet sind. Erst ein genau abgestimmtes Verhältnis von hydrophilen, lipophilen und siliconophilen Polymerblöcken verleiht dem Stabilisator in der jeweiligen Anwendung seine optimale Wirkung. Die Erfahrung lehrt, dass rohstoffbedingte Schwankungen der hydrophilen, lipophilen und siliconophilen Anteile im Polysiloxan-Polyoxyalkylen-Blockmischpolymerisat eine schlechtere Kompatibilisierung des Schaumstabilisators mit der reagierenden Polyurethanmatrix bewirken können, was eine homogene Verteilung des Tensids und die anschließende Migration zur Grenzfläche derart behindern kann, dass ein Schaumkollaps die unmittelbare Folge ist.

Es bestand somit die technische Aufgabe, Schaumstabilisatoren zumindest teilweise auf der Basis nachwachsender Rohstoffe herzustellen, deren Leistungsfähigkeit mit der etablierter Siliconpolyethercopolymeren rein petrochemischen Ursprungs vergleichbar und/oder sogar überlegen ist. In einer weiteren Ausgestaltung besteht die technische Aufgabe darin, einen synthetischen Zugang zu Schaumstabilisatoren auf Basis von Siliconpolyethercopolymeren zu erschließen, die in ihrem Polyetheranteil sowohl freie Hydroxylgruppen als auch mit aus nativen Rohstoffen stammenden Acylresten veresterte Hydroxyltermini aufweisen.

Überraschenderweise wurde nun gefunden, dass mit Schaumstabilisatoren auf Basis natürlich vorkommender Fettsäuren nicht nur eine den etablierten Silicontensiden ebenbürtige Performance bei der Herstellung von Polyurethanschäumen erzielt werden kann, sondern dass darüber hinaus in einigen Schaumarten anwendungstechnische Vorteile, wie z. B. eine höhere Zellfeinheit im Heißweichschaum realisiert werden kann und/oder eine Erhöhung des Anteils von Polyolen aus nachwachsenden Rohstoffen in der jeweiligen Formulierung bzw. eine vollständige Substitution des Polyols auf petrochemischer Basis durch Polyole aus nachwachsenden Rohstoffen realisiert werden kann, ohne dass die physikalischen Eigenschaften des Polyurethanschaums nachteilig beeinflusst werden.

Gegenstand der Erfindung:

Gegenstand der Erfindung ist die Herstellung von Polyurethanschäumen unter Verwendung von Schaumstabilisatoren, die zumindest teilweise auf Basis nachwachsender Rohstoffe hergestellt werden. Die verwendeten Schaumstabilisatoren sind Polysiloxan-Polyoxyalkylen-Copolymere der folgenden Struktur:

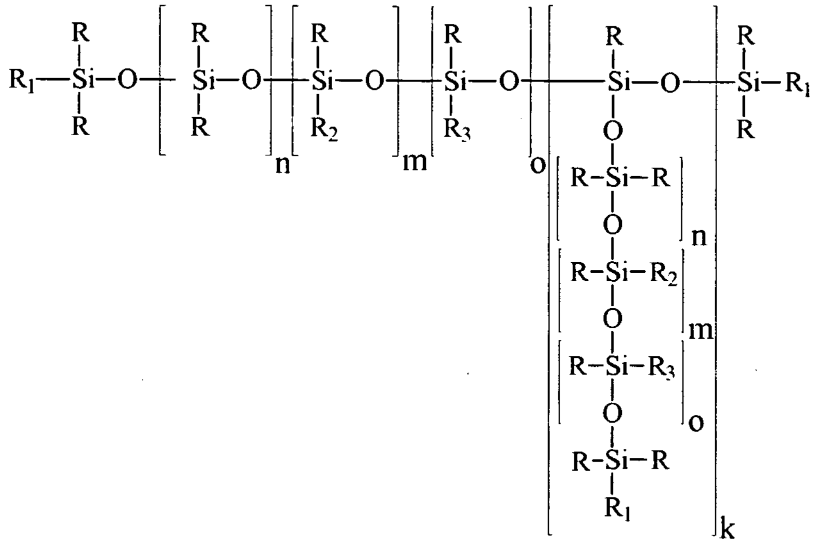

(I)

worin

- n 0-500, vorzugsweise 10-200, insbesondere 15-100,
- m 1-60, vorzugsweise 1-30, insbesondere 1-25,
- o 0-60, vorzugsweise 0-30, insbesondere 0-25
- k 0-10, vorzugsweise 0-3 ist,
- R ein linearer, cyclischer oder verzweigter, alipha- tischer oder aromatischer, gesättigter oder unge- sättigter Kohlenwasserstoffrest mit 1 bis zu 20 C- Atomen sein kann, der Heteroatome wie Sauerstoff, Stickstoff, Phosphor oder Schwefel enthalten kann, der jedoch vorzugsweise eine Methylgruppe ist,
- $R_1$ R, $R_2$ oder $R_3$ ist,
- $R_2$ $CH_2$-$CH_2$-$CH_2$-O-($CH_2$-$CH_2$O-)$_x$-($CH_2$-CH (R")O-)$_y$-C(O)-R' ist, worin R' den von einbasischen Fettsäuren auf Basis natürlicher pflanzlicher oder tierischer Öle mit 6-30 Kohlenstoffatomen, insbesondere mit 8-22 Kohlenstoffatomen, wie Capronsäure, Caprylsäure, Caprin- säure, Laurinsäure, Myristinsäure, Palmitinsäure, Palmitoleinsäure, Isostearinsäure, Stearinsäure, 12-Hydroxystearinsäure, Dihydroxystearinsäure, Ölsäu- re, Linolsäure, Petrolesinsäure, Elaidinsäure, Arachinsäure, Behensäure, Erucasäure, Gadoleinsäure, Linolensäure, Eicosapentaensäure, Docosahexaensäure, Arachidonsäure, welche allein oder in Mischung eingesetzt werden können, abgeleiteten Alkylrest darstellt; als Rest R' kann ebenfalls der von Polykondensationsprodukten von hydroxyfunktionali- sierten Säuren, beispielsweise Poly-12-hydroxy- stearinsäure oder Polyricinolsäure, abgeleitete Alkylrest eingesetzt werden;
- $R_3$ $CH_2$-$CH_2$-$CH_2$-O- ($CH_2$-$CH_2$O-)$_x$-($CH_2$-CH(R") O-)$_y$-R''', $CH_2$-$CH_2$-O- ($CH_2$-$CH_2$O-)$_x$- ($CH_2$-CH(R")O-)$_y$-R''', $CH_2$-$CH_2$-$CH_2$-O- ($CH_2$-$CH_2$O-)$_x$-($CH_2$-CH(R")O-)$_y$-(SO)$_z$-R''', $CH_2$-$R^{IV}$, $CH_2$-$CH_2$- (O)$_{x'}$-$R^{IV}$, $CH_2$-$CH_2$-$CH_2$-O-$CH_2$-CH(OH)-$CH_2$OH,

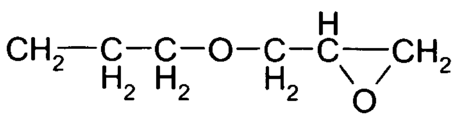
,

$CH_2$-$CH_2$-$CH_2$-O-$CH_2$-C($CH_2$OH)$_2$-$CH_2$-$CH_3$,
ist, worin

- x 0 bis 100,
- x' 0 oder 1,
- y 0 bis 100,
- z 0 bis 100,
- R" eine gegebenenfalls substituierte Alkylgruppe mit 1 bis 4 C-Atomen ist und

R''' einen Wasserstoffrest oder eine Alkylgruppe mit 1 bis 4 C-Atomen; die Gruppe -C(O)-R''; eine Alkylarylgruppe, wie die Benzylgruppe; die Gruppe -C(O)NH-R' bedeutet,

$R^{IV}$ ein gegebenenfalls substituierter, z. B. mit Halogenen substituierter, Kohlenwasserstoffrest mit 1 bis 50, vorzugsweise 9 bis 45, bevorzugt 13 bis 37 C-Atomen ist, und

SO der Rest $-CH(C_6H_5)-CH_2-O-$ bedeutet.

Die verschiedenen Monomereinheiten sowohl der Siloxankette als auch der Polyoxyalkylenkette können untereinander blockweise aufgebaut sein oder aber auch einer statistischen Verteilung unterliegen.

Die in den hier angeführten Formeln wiedergegebenen Indexzahlen und die Wertbereiche der angegebenen Indices verstehen sich daher als die Mittelwerte der möglichen statistischen Verteilung der tatsächlichen isolierten Strukturen und/oder deren Mischungen. Dies gilt auch für als solche an sich exakt wiedergegebene Strukturformeln, wie beispielsweise für Formel (II) in Beispiel 9. Weitere Gegenstände der Erfindung sind gekennzeichnet durch die Inhalte der Unteransprüche.

Die der Erfindung zu Grunde liegenden Polysiloxan-Polyoxyalkylen-Blockmischpolymerisate können, wie im Stand der Technik beschrieben, hergestellt werden.

So kann z. B. ein Gemisch verschiedener Allylpolyether mit unterschiedlichen Molgewichten und Alkylenoxidgehalten, die teilweise oder ganz unter enzymatischer Katalyse mit Fettsäuren verestert sind, durch Platin-katalysierte Hydrosilylierung mit einem end- und/oder seitständig SiH-funktionellen Polydimethylsiloxan über SiC-Bindungsbildung verknüpft werden. Die Patentanmeldung EP 1816154 A1 beschreibt eine solche Veresterung als auch Hydrosilylierung beispielhaft.

Die bei der Herstellung der Polysiloxan-Polyoxyalkylen-Blockmischpolymerisate verwendeten Wasserstoffsiloxane können ebenfalls wie im Stand der Technik, beispielsweise in der EP 1439200 B1 beschrieben, hergestellt werden. Die verwendeten ungesättigten Polyoxyalkylene können nach dem literaturbekannten Verfahren der alkalischen Alkoxylierung von Allylalkohol oder unter Verwendung von DMC-Katalysatoren, wie es z. B. die US-Patentschrift 5877268 beschreibt, hergestellt werden.

Die Herstellung der erfindungsgemäßen Polyurethanschäume kann mit im Stand der Technik bekannten Formulierungen und Verfahrensweisen mit jeweils parallel hergestellten Schäumen unter Zusatz etablierter Schaumstabilisatoren als Referenz erfolgen.

Die erfindungsgemäßen Schaumstabilisatoren und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden, Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

In den Beispielen wird als Platin-Katalysator der Karstedt-Katalysator, ein Divinyltetramethyldisiloxan-Platin[0] Katalysator verwendet.

Beispiel 1 (erfindungsgemäß):

In einem 500-ml-Vierhalskolben mit angeschlossenem KPG-Rührer, Rückflusskühler und Innenthermometer werden 80,0 g eines mit Vorlauffettsäure (handelsübliche Fettsäuremischung, bestehend im Wesentlichen aus Octan- und Dekansäure, beispielsweise Edenor V85 von der Cognis GmbH) enzymatisch veresterten Allylpolyethylenglykols mit hydrogen)dimethylsiloxan-Copolymeren mit einem Wasserstoffanteil von 3,5 val/kg unter Rühren auf 70° C erhitzt. 5 ppm eines Platin-Katalysators werden zugegeben und nach zwei Stunden Reaktionszeit um weitere 5 ppm ergänzt. Der gasvolumetrisch bestimmte Umsatz ist nach 3,5 Stunden quantitativ. Das klare hellgelbe Produkt hat eine Viskosität von 527,8 mPas und eignet sich beispielsweise als Polyurethanschaumstabilisator, vorzugsweise zur Herstellung von Polyurethanhartschaum.

Beispiel 2 (erfindungsgemäß):

In einem 500-ml-Vierhalskolben mit angeschlossenem KPG-Rührer, Rückflusskühler und Innenthermometer werden 80,6 g eines mit Palmstearinsäure (handelsübliche Fettsäuremischung, bestehend im Wesentlichen aus Palmitin-und Stearinsäure, beispielsweise Edenor ST1 von der Cognis GmbH, Kortacid PT10 von Akzo Nobel oder SA 18/65 der Peter Cremer GmbH) enzymatisch veresterten Allylpolyethylenglykols mit einem mittleren Molekulargewicht von 846 g/mol mit 57,6 g eines Allylpolyethylenglykols mit einem mittleren Molekulargewicht von 604 g/mol und 40 g eines Poly(methylhydrogen)dimethylsiloxan-Copolymeren mit einem Wasserstoffanteil von 3,5 val/kg unter Rühren auf 70° C erhitzt. 5 ppm eines Platin-Katalysators werden zugegeben. Der gasvolumetrisch bestimmte Umsatz ist nach 2 Stunden quantitativ. Das klare hellgelbe Produkt hat eine Viskosität von 643,4 mPas und eignet sich beispielsweise als Polyurethanschaumstabilisator, vorzugsweise zur Herstellung von Polyurethanhartschaum.

Beispiel 3 (erfindungsgemäß):

In einem 500-ml-Vierhalskolben mit angeschlossenem KPG-Rührer, Rückflusskühler und Innenthermometer werden 133,3 g eines mit Vorlauffettsäure (handelsübliche Fettsäuremischung, bestehend im Wesentlichen aus Octan- und Dekansäure, beispielsweise Edenor V85 von der Cognis GmbH) enzymatisch veresterten Allylpolyethylenglykols mit einem mittleren Molekulargewicht von 746 g/mol mit 37,5 g eines Poly(methylhydrogen)dimethylsiloxan-Copolymeren mit einem Wasserstoffanteil von 3,5 val/kg unter Rühren auf 70° C erhitzt. 5 ppm eines Platin-Katalysators werden zugegeben. Der gasvolumetrisch bestimmte Umsatz ist nach 2 Stunden quantitativ. Das klare hellgelbe Produkt hat eine Viskosität von 384,1 mPas und eignet sich beispielsweise als Polyurethanschaumstabilisator, vorzugsweise zur Herstellung von Polyurethanhartschaum.

Beispiel 4 (erfindungsgemäß):

In einem 500-ml-Vierhalskolben mit angeschlossenem KPG-Rührer, Rückflusskühler und Innenthermometer werden 114,5 g eines mit Vorlauffettsäure (handelsübliche Fettsäuremischung, bestehend im Wesentlichen aus Octan- und Dekansäure, beispielsweise Edenor V85 von der Cognis GmbH) enzymatisch veresterten Allylpolyethylenglykols mit einem mittleren Molekulargewicht von 540 g/mol mit 35,3 g 1,1,1,3,5,5,5-Heptamethyltrisiloxan mit einem Wasserstoffanteil von 4,45 val/kg unter Rühren auf 70° C erhitzt. 5 ppm eines Platin-Katalysators werden zugegeben. Die Temperatur steigt bis 81 °C an. Der gasvolumetrisch bestimmte Umsatz ist nach 2 Stunden quantitativ. Das klare hellgelbe Produkt hat eine Viskosität von 35 mPas und eignet sich beispielsweise als Polyurethanschaumstabilisator, vorzugsweise zur Herstellung von Polyurethanesterschaum.

Beispiel 5 (erfindungsgemäß):

In einem 500-ml-Vierhalskolben mit angeschlossenem KPG-Rührer, Rückflusskühler und Innenthermometer werden 122,5 g eines mit Vorlauffettsäure (handelsübliche Fettsäuremischung, bestehend im Wesentlichen aus Octan- und Dekansäure, beispielsweise Edenor V85 von der Cognis GmbH) enzymatisch veresterten Allylpolyethylenglykols mit einem mittleren Molekulargewicht von 747 g/mol mit 27,3 g 1,1,1,3,5,5,5-Heptamethyltrisiloxan mit einem Wasserstoffanteil von 4,45 val/kg unter Rühren auf 70° C erhitzt. 5 ppm eines Platin-Katalysators werden zugegeben. Die Temperatur steigt bis 85 °C an. Der gasvolumetrisch bestimmte Umsatz ist nach 2 Stunden quantitativ. Das klare hellgelbe Produkt hat eine Viskosität von 57 mPas und eignet sich beispielsweise als Polyurethanschaumstabilisator, vorzugsweise zur Herstellung von Polyurethanesterschaum.

Beispiel 6 (nicht erfindungsgemäß):

In einem 500-ml-Vierhalskolben mit angeschlossenem KPG-Rührer, Rückflusskühler und Innenthermometer werden 119,2 g eines mit Essigsäure oder Essigsäureanhydrid nach literaturbekannten Methoden (siehe Organikum) veresterten Allylpolyethylenglykols mit einem mittleren Molekulargewicht von 644 g/mol mit 30,8 g 1,1,1,3,5,5,5-Heptamethyltrisiloxan mit einem Wasserstoffanteil von 4,45 val/kg unter Rühren auf 70° C erhitzt. 5 ppm eines Platin-Katalysators werden zugegeben. Die Temperatur steigt bis 80 °C an. Der gasvolumetrisch bestimmte Umsatz ist nach 2 Stunden quantitativ. Das klare hellgelbe Produkt hat eine Viskosität von 56 mPas.

Beispiel 7 (nicht erfindungsgemäß):

In einem 500-ml-Vierhalskolben mit angeschlossenem KPG-Rührer, Rückflusskühler und Innenthermometer werden 195,8 g eines mit Essigsäure nach literaturbekannten Methoden veresterten Allylpolyoxyalkylens mit einem mittleren Molekulargewicht von 2.046 g/mol, einem Propylenoxidanteil von 54 % und einem Ethylenoxidanteil von 46 % mit 51 g eines Poly(methylhydrogen)dimethylsiloxan-Copolymeren mit einem Wasserstoffanteil von 1,39 val/kg unter Rühren auf 70° C erhitzt. 5 ppm eines Platin-Katalysators werden zugegeben. Der gasvolumetrisch bestimmte Umsatz beträgt nach 8,5 Stunden 99 %.

Beispiel 8 (erfindungsgemäß):

In einem 500-ml-Vierhalskolben mit angeschlossenem KPG-Rührer, Rückflusskühler und Innenthermometer werden 53,1 g eines mit Vorlauffettsäure (handelsübliche Fettsäuremischung, bestehend im Wesentlichen aus Octan- und Dekansäure, Edenor V85 von der Cognis GmbH) enzymatisch veresterten Allylpolyoxyalkylens mit einem mittleren Molekulargewicht von 2.884 g/mol, einem Propylenoxidanteil von 75 % und einem Ethylenoxidanteil von 25 % mit 150,5 g eines mit Essigsäure nach literaturbekannten Methoden veresterten Allylpolyoxyalkylens mit einem mittleren Molekulargewicht von 2.046 g/mol, einem Propylenoxidanteil von 54 % und einem Ethylenoxidanteil von 46 % und 49,0 g eines Poly(methylhydrogen)dimethylsiloxan-Copolymeren mit einem Wasserstoffanteil von 1,39 val/kg unter Rühren auf 70° C erhitzt. 5 ppm eines Platin-Katalysators werden zugegeben. Der gasvolumetrisch bestimmte Umsatz ist nach 8 Stunden quantitativ. Das Produkt eignet sich beispielsweise als Polyurethanschaumstabilisator, vorzugsweise zur Herstellung von Polyurethanweichschaum.

Beispiel 9 (erfindungsgemäß):

In einem 500-ml-Vierhalskolben mit angeschlossenem KPG-Rührer, Rückflusskühler und Innenthermometer werden 121,8 g eines mit Vorlauffettsäure (handelsübliche Fettsäuremischung, bestehend im Wesentlichen aus Octan- und Dekansäure, beispielsweise Edenor V85 von der Cognis GmbH) enzymatisch veresterten Allylpolyoxyalkylens mit einem mittleren Molekulargewicht von 2.884 g/mol, einem Propylenoxidanteil von 75 % und einem Ethylenoxidanteil von 25 % mit 86,4 g eines mit Essigsäure nach literaturbekannten Methoden veresterten Allylpolyoxyalkylens mit einem mittleren Molekulargewicht von 2.046 g/mol, einem Propylenoxidanteil von 54 % und einem Ethylenoxidanteil von 46 % und 45,0 g eines Poly(methylhydrogen)dimethylsiloxan-Copolymeren mit einem Wasserstoffanteil von 1,39 val/kg unter Rühren auf 70° C erhitzt. 5 ppm eines Platin-Katalysators werden zugegeben. Der gasvolumetrisch bestimmte Umsatz ist nach 8 Stunden quantitativ. Das Produkt eignet sich beispielsweise als Polyurethanschaumstabilisator, vorzugsweise zur Herstellung von Polyurethanweichschaum.

Herstellung von Polyurethan-Hartschaum:

Die erfindungsgemäßen Polyorganosiloxane eignen sich für die Anwendung als Zellstabilisator bei Polyurethan- und Polyisocyanurat-Hartschaumstoffen, wie ein anwendungstechnischer Vergleich mit konventionellen Polyethersiloxanen, welche den Stand der Technik darstellen, zeigt. Eine typische Formulierung zur Herstellung von Polyurethan- bzw. Polyisocyanurat-Hartschaumstoffen basiert auf einem oder mehreren organischen Isocyanaten mit zwei oder mehr Isocyanat-Funktionen, einem oder mehreren Polyolen mit zwei oder mehr gegenüber Isocyanat reaktiven Gruppen, Katalysatoren für die Reaktionen Isocyanat-Polyol und/oder Isocyanat-Wasser und/oder die Isocyanat-Trimerisierung, Polyethersiloxan-Zellstabilisatoren, Wasser, optional physikalischen Treibmitteln, optional Flammschutzmitteln und ggf. weiteren Additiven. Für den anwendungstechnischen Vergleich von erfindungsgemäßen und konventionellen Zellstabilisatoren wurde folgende Schaumformulierung verwendet:

| Komponente | Einsatzmenge |
|---|---|
| Polyetherpolyol* | 95 g (100 Teile) |
| DMCHA | 1,4 g (1,5 Teile) |
| Wasser | 2,5 g (2,6 Teile) |
| cyclo-Pentan | 12,4 g (13,1 Teile) |
| Stabilisator | 1,4 g (1,5 Teile) |
| MDI** | 188,6 g (198,5 Teile) |

* Daltolac R 471 der Firma Huntsman
** polymeres MDI, 200 mPa*s, 31,5 % NCO, Funktionalität 2,7

Die Durchführung der Vergleichsverschäumungen erfolgte im Handmischverfahren. Dazu wurden Polyol, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1.000 Upm vermischt. Durch erneutes abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3.000 Upm verrührt und sofort in eine auf 45° C

thermostatisierte Aluminiumform von 145 cm x 14 cm x 3,5 cm Größe überführt, welche im Winkel von 10° (entlang der 145 cm messenden Seite) geneigt und mit Polyethylenfolie ausgekleidet war. Die Schaumformulierung wurde dabei an der tiefer liegenden Seite eingetragen, so dass der expandierende Schaum die Form im Eingussbereich ausfüllt und in Richtung der höher liegenden Seite aufsteigt. Die Einsatzmenge an Schaumformulierung war dabei so bemessen, dass sie unterhalb der zur Mindestbefüllung der Form notwendigen Menge lag. Die Länge des nach Aushärtung erhaltenen Schaumstoff-Formteils kann somit - normiert auf das Gewicht - als Maß für die Volumenausbeute herangezogen werden.

Nach 10 min wurden die Schaumstoffe entformt und analysiert. Ihr Oberflächenbild und das Auftreten von Innenstörungen wurden subjektiv mit Hilfe von Referenzverschäumungen anhand einer Skala von 1 bis 10 beurteilt, wobei 10 einen ungestörten Schaum und 1 einen extrem stark gestörten Schaum repräsentiert. Auch die Porenstruktur (mittlere Zahl der Zellen pro 1 cm) wurde auf einer Schnittfläche optisch durch Vergleich mit Vergleichsschäumen beurteilt. Die Fließlänge (als Maß für die Volumenausbeute) wurde durch Ausmessen des Schaumstoff-Formteils bestimmt und zum besseren Vergleich gemäß folgender Formel auf ein Standardgewicht von 260 g und Normdruck umgerechnet:

Reduzierte Fließlänge = Schaumlänge * 260g * Luftdruck / (Schaumgewicht * 1.013 mbar)

Alle verwendeten Zellstabilisatoren und die zugehörigen Verschäumungsergebnisse sind in Tabelle 1 zusammengestellt.

Tabelle 1:

| Zellstabilisator | Schaumqualität hinsichtlich Defekten | | | Zellfeinheit [Zellen/cm] | Red. Fließlänge [cm] |
|---|---|---|---|---|---|
| | Oberseite | Unterseite | Innen | | |
| TEGOSTAB B 8404* | 4 | 4.5 | 7 | 36-40 | 128,5 |
| Ausführungsbeispiel 1 | 5.5 | 5 | 7 | 36-40 | 129,9 |
| Ausführungsbeispiel 2 | 4.5 | 4 | 6.5 | 36-40 | 126,5 |
| Ausführungsbeispiel 3 | 4.5 | 4.5 | 6.5 | 36-40 | 129,6 |
| * Polyethersiloxan-Zellstabilisator für Polyurethan-Hartschaumanwendungen von der Evonik Goldschmidt GmbH | | | | | |

Die Ergebnisse belegen, dass mit den erfindungsgemäßen Polyethersiloxanen Hartschaumstoffe hergestellt werden können. Dabei werden hinsichtlich Zellfeinheit gleich gute Ergebnisse, hinsichtlich Oberflächenqualität und Fließfähigkeit bzw. Volumenausbeute sogar bessere Ergebnisse (Ausführungsbeispiel 1) als mit konventionellen Polyethersiloxanen (Stand der Technik) erzielt.

Beispiele für die Herstellung von Polyesterpolyurethan-Weichschaum:

Polyesterpolyurethanschäume werden hergestellt durch die Umsetzung einer Reaktionsmischung bestehend aus a) einem Polyesterpolyol, welches im Durchschnitt mindestens zwei Hydroxy-Gruppen pro Molekül trägt, b) einem Polyisocyanat das im Durchschnitt mindestens zwei Isocyanat-Gruppen pro Molekül trägt, wobei das Polyol und das Polyisocyanat den größten Teil der Reaktionsmischung ausmachen und das Verhältnis der beiden Komponenten zueinander geeignet ist um einen Schaum herzustellen, c) einem Treibmittel in geringen Mengen, das für die Schäumung der Reaktionsmischung ausreicht, d) einer katalytischen Menge eines Katalysators zur Herstellung des Polyurethanschaums, dieser besteht meist aus einem oder mehreren Aminen, und e) einer geringen Menge eines Schaumstabilisators, bestehend aus organomodifizierten Siloxanen und/oder anderen Tensiden, der die schäumende Mischung ausreichend stabilisiert.

So können auch die organomodifizierten Siloxane der allgemeinen Formel (I) allein oder in Kombination mit nicht Si-haltigen Tensiden als Stabilisator eingesetzt werden. Die organomodifizierten Siloxane der allgemeinen Formel (I) können auch in geeigneten Lösungsmitteln verdünnt werden, um die Dosierbarkeit zu vereinfachen oder auch die Einarbeitbarkeit in das Reaktionsgemisch zu verbessern.

Weitere Additive können sein: Flammschutzmittel, Zellöffner, Farbstoffe, UV-Stabilisatoren, Substanzen zur Verhinderung eines mikrobiellen Befalls sowie weitere Zusätze, die für den Fachmann nahe liegend und hier nicht weiter aufgeführt sind.

Es können die nach dem Stand der Technik bekannten Polyesterpolyole, Isocyanate, Treibmittel, Flammschutzmittel, Katalysatoren, Additive und Herstellungsverfahren zum Einsatz kommen. Beispielsweise können die in der Patentschrift EP 0048984, die hiermit als Referenz angeführt wird, genannten Komponenten verwendet werden.

Rohstoffe: Desmophen 2200 von Bayer, Toluylendiisocyanat (TDI 80/20) von Bayer, N-Methylmorpholin (NMM).

Formulierung: 100 Teile Polyesterpolyol, 56,5 Teile TDI 80, 5,1 Teile Wasser, 1,4 Teile NMM, 0,13 oder 0,26 Teile Schaumstabilisator.

Hierbei wurde aus Wasser, Amin und Schaumstabilisator eine Aktivatorlösung hergestellt unter Zugabe von 0,5 Teilen eines Polyethers mit 90 % PO und 10 % EO und einer mittleren Molmasse von 2.000 g/mol als Lösungsvermittler und 0,5 Teilen eines Polyoxyethylen Sorbitol Oleat-Laurat (Handelsname: TEGO PEG 30 Tol der Evonik Goldschmidt GmbH).

Die Verschäumung wurde auf einer Hochdruckmaschine der Firma Hennecke, Modell UBT, mit einem Ausstoß von 4 kg/min vorgenommen. Es wurden das Polyol, die Isocyanate und die Aktivatorlösung getrennt dosiert. Das Reaktionsgemisch wurde in einen mit Papier ausgekleideten Behälter mit einer Grundfläche von 30 x 30 cm dosiert. Man bestimmte die Steighöhe und den Rückfall. Als Rückfall wird die Abnahme der Steighöhe 1 Minute nach Erreichen der maximalen Steighöhe bezeichnet.

Nach Aushärten der Schäume wurden die Zellenzahl und die Luftdurchlässigkeit bestimmt. Die Luftdurchlässigkeit ist ein Maß für den Anteil an offenen Zellen im Schaum. Für viele Anwendungen wird ein möglichst offenzelliger Schaum gewünscht. Die Offenzelligkeit der Schäume wurde hier über die Luftdurchlässigkeit bestimmt. Die Luftdurchlässigkeit ist angegeben in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt.

In der folgenden Tabelle 2 sind die Ergebnisse der Herstellung von Polyesterpolyurethan-Weichschäumen unter Verwendung der erfindungsgemäßen Schaumstabilisatoren der allgemeinen Formel (I) (Ausführungsbeispiele 4 und 5) und unter Verwendung eines im Stand der Technik bekannten organomodifizierten Siloxans als Schaumstabilisator (Vergleichsbeispiel 6) zusammengefasst.

Es werden der verwendete Schaumstabilisator und die verwendete Menge davon (in Teilen), die Schaumhöhe (cm), der Rückfall (cm), die Luftdurchlässigkeit (LDL in mm) und die Zellenzahl ($cm^{-1}$) der erhaltenen Schäume dargestellt.

Tabelle 2:

| Schaumstabilisator | Menge (Teile) | Schaumhöhe (cm) | Rückfall (cm) | LDL (mm) | Zellenzahl ($cm^{-1}$) | Bemerkungen |
|---|---|---|---|---|---|---|
| Ausführungsbeispiel 4 | 0,2 | 29,3 | 0,6 | 29 | 12 | fehlerfrei |
| Ausführungsbeispiel 5 | 0,2 | 29,2 | 1,0 | 34 | 13 | fehlerfrei |
| Vergleichsbeispiel 6 | 0,2 | 28,9 | 0,9 | 34 | 12 | in Ordnung |

Tabelle 2 zeigt, dass die erfindungsgemäßen Ausführungsbeispiele 4 und 5 zu vergleichbaren Ergebnissen führen wie es bei einem Stabilisator, basierend auf rein petrochemischen Rohstoffen erwartet werden kann. Die bei Mitverwendung der erfindungsgemäßen Schaumstabilisatoren sich ergebenden Schäume zeigen zumindest vergleichbare, teilweise verbesserte Produkteigenschaften. Die erfindungsgemäßen Schaumstabilisatoren stellen somit eine sehr gute Alternative gegenüber den petrochemischen Schaumstabilisatoren dar.

Beispiele für die Herstellung von Polyurethan-Heißweichschaum:

Die erfindungsgemäßen Polyorganosiloxane eignen sich für die Anwendung als Schaumstabilisator bei Polyurethan-Weichschaumstoffen, wie ein anwendungstechnischer Vergleich mit konventionellen Polyethersiloxanen, welche den Stand der Technik darstellen, zeigt. Eine typische Formulierung zur Herstellung von Polyurethan-Weichschaumstoffen basiert auf einem oder mehreren organischen Isocyanaten mit zwei oder mehr Isocyanat-Funktionen, einem oder mehreren Polyolen mit zwei oder mehr gegenüber Isocyanat reaktiven Gruppen, Katalysatoren für die Reaktionen Isocyanat-Polyol und/oder Isocyanat-Wasser und/oder die Isocyanat-Trimerisierung, Polyethersiloxan-Schaumstabilisatoren, Wasser, optional physikalischen Treibmitteln, optional Flammschutzmitteln und ggf. weiteren Additiven.

Für den anwendungstechnischen Vergleich von erfindungsgemäßen und konventionellen Schaumstabilisatoren wurde ein Polyurethanweichschaum in einer 27 cm x 27 cm großen offenen Holzkiste mit einer Wandhöhe von 27 cm durch Verschäumung einer Polyurethanformulierung mit folgenden Bestandteilen produziert:

| | |
|---|---|
| 100 Teile | trifunktionelles Polypropylenglykol, Desmophen VPPU 20 WB 01 von Bayer Material Science AG |
| 5,0 Teile | Wasser |
| 0,15 Teile | Aminkatalysator*1 |
| 0,23 Teile | Zinn-Katalysator*2 |
| 5,0 Teile | eines physikalischen Treibmittels (Dichlormethan) |
| 63,04 Teile | Toluylendiisocyanat (TDI 80/20) von Bayer Material Science AG |
| 0,8 Teile bzw. | 1,0 Teile Schaumstabilisator |

*1 TEGOAMIN®33, erhältlich bei der Firma Evonik Goldschmidt GmbH, hierbei handelt es sich um eine 33%ige Lösung von Triethylendiamin in Dipropylenglykol

*2 KOSMOS®29, erhältlich bei der Firma Evonik Goldschmidt GmbH, hierbei handelt es sich um das Zinn-II-Salz der Ethylhexansäure.

Hierbei werden die erfinderischen Schaumstabilisatoren aus Beispiel 8 und Beispiel 9 eingesetzt. Es handelt sich dabei um Silicon-Polyether-Copolymere, deren Polyether ganz oder teilweise unter enzymatischer Katalyse mit Fettsäuren verestert wurden.

Als Referenz dient ein Silicon-Polyether-Copolymer bei dem die Polyether ausschließlich nach literaturbekannten Methoden mit Essisäure verestert wurden (Beispiel 7).

Die hergestellten Schäume wurden anhand folgender physikalischer Eigenschaften beurteilt:

1) Rücksacken des Schaumstoffes nach dem Ende der Steigphase (=Rückfall).
2) Raumgewicht (RG)
3) Die Porosität, also die Luftdurchlässigkeit, des Schaums wurde durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.
4) Die Zellstruktur ergibt sich aus dem qualitativ optischen Vergleich der Zellgrößenverteilung.
5) Zahl der Zellen/cm als auch die Regelmäßigkeit der erhaltenen Zellstruktur.

Es wurden folgende Ergebnisse erhalten:

Tabelle 3:

| 0,8 Teile Stabilisator | Rückfall [cm] | Raumgewicht [kg/m3] | Porosität [mm Wassersäule] | Zellstruktur | Zellfeinheit [Anzahl Zellen pro cm] |
|---|---|---|---|---|---|
| Beispiel 7 (Referenz) | -0,4 | 19,5 | 17 | regelmäßig | 11 |
| Beispiel 8 | -0,3 | 19,3 | 15 | fein und regelmäßig | 13-14 |
| Beispiel 9 | -0,3 | 19,3 | 12 | fein und regelmäßig | 13 |

Tabelle 4:

| 1,0 Teile Stabilisat or | Rückfall [cm] | Raumgewicht [kg/m3] | Porosität [mm Wassersäule] | Zellstruktur | Zellfeinheit [Anzahl Zellen pro cm] |
|---|---|---|---|---|---|
| Beispiel 7 (Referenz) | -0,1 | 19,3 | 39 | regelmäßig | 12 |
| Beispiel 8 | -0,1 | 19,5 | 17 | fein und regelmäßig | 14 |
| Beispiel 9 | 0,0 | 19,2 | 19 | fein und regelmäßig | 14 |

Es zeigt sich deutlich, dass die Verwendung enzymatisch veresterter Polyether als Komponente eines Weichschaumstabilisators einen überraschend positiven Effekt auf die Feinzelligkeit und Regelmäßigkeit der erhaltenen Polyurethanschäume hat. Ferner zeichnen sich die erfindungsmäßigen Stabilisatoren durch ein breites Verarbeitungsspiel aus. Während beim Referenzstabilisator eine Erhöhung der Stabilisatormenge von 0,8 Teile auf 1,0 Teile eine Erhöhung des Staudruckes zur Folge hat, bleibt die Porosität der erfindungsmäßigen Stabilisatoren vorteilhaft innerhalb der allgemeinen Schwankungen der Messwerte konstant

**Patentansprüche**

**1.** Verwendung von Schaumstabilisatoren der allgemeinen Formel (I)

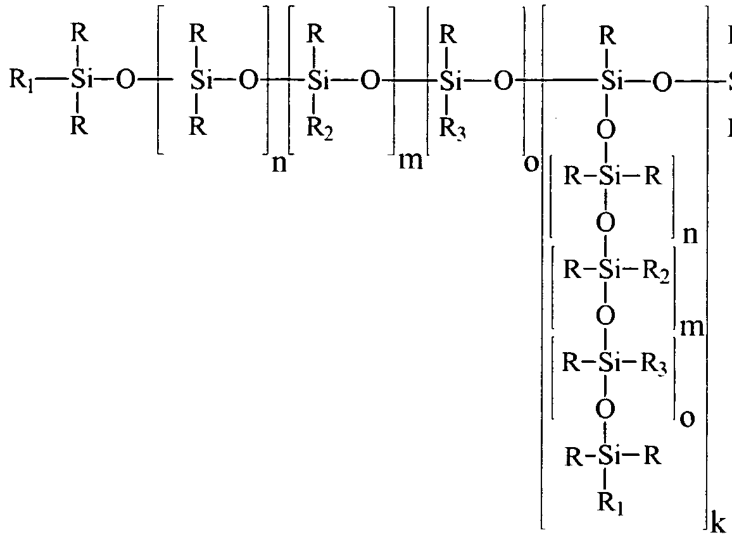 ( I )

worin

n 0-500,
m 1-60,
o 0-60,
k 0-10,
R ein linearer, cyclischer oder verzweigter, aliphatischer oder aromatischer, gesättigter oder ungesättigter Kohlenwasserstoffrest mit 1 bis zu 20 C-Atomen sein kann, der Heteroatome wie Sauerstoff, Stickstoff, Phosphor oder Schwefel enthalten kann, ist,
$R_1$ R, $R_2$ oder $R_3$ ist,
$R_2$ $CH_2$-$CH_2$-$CH_2$-O-($CH_2$-$CH_2$O-$)_x$-($CH_2$-CH(R'')O-$)_y$-C(O)R' ist worin R' den von einbasischen Fettsäuren auf Basis natürlicher pflanzlicher oder tierischer Öle mit 6-30 Kohlenstoffatomen, insbesondere mit 8-22 Kohlenstoffatomen, wie Capronsäure, Caprylsäure, Caprinsäure, Laurinsäure, Myristin- säure, Palmitinsäure, Palmitoleinsäure, Isostearinsäure, Stearinsäure, 12-Hydroxystearinsäure, Dihydroxystearinsäure, Ölsäure, Linolsäure, Petrolesinsäure, Elaidinsäure, Arachinsäure, Behensäure, Erucasäure, Gadoleinsäure, Linolensäure, Eicosa- pentaensäure, Docosahexaensäure, Arachidonsäure, welche allein oder in Mischung eingesetzt werden können, abgeleiteten Alkylrest darstellt,
$R_3$ $CH_2$-$CH_2$-$CH_2$-O-($CH_2$-$CH_2$O-$)_x$-($CH_2$-CH(R'')O-$)_y$-R''', $CH_2$-$CH_2$-O-($CH_2$-$CH_2$O-$)_x$-($CH_2$-CH(R'')O-$)_y$-R''', $CH_2$-$CH_2$-$CH_2$-O-($CH_2$-$CH_2$O-$)_x$-($CH_2$- CH(R'')O-$)_y$-(SO$)_z$-R''', $CH_2$-$R^{IV}$, $CH_2$-$CH_2$- (O$)_{x'}$-$R^{IV}$, $CH_2$-$CH_2$-$CH_2$-O-$CH_2$-CH(OH)-$CH_2$OH,

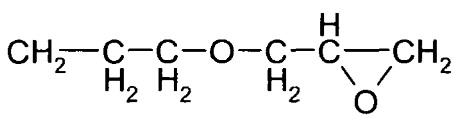 ,

worin $CH_2$-$CH_2$-$CH_2$-O-$CH_2$-$C(CH_2OH)_2$-$CH_2$-$CH_3$ ist,
x 0 bis 100,
x' 0 oder 1,
y 0 bis 100,
z 0 bis 100,
R" eine gegebenenfalls substituierte Alkylgruppe mit 1 bis 4 C-Atomen ist und
R''' einen Wasserstoffrest oder eine Alkylgruppe mit 1 bis 4 C-Atomen, die Gruppe -C(O)-R'', eine Alkylarylgruppe, wie die Benzylgruppe; die Gruppe -C(O)NH-R' bedeutet,
$R^{IV}$ ein gegebenenfalls substituierter, gegeben- enfalls mit Halogenen substituierter, Kohlenwasserstoffrest mit 1 bis 50,
SO den Rest -$CH(C_6H_5)$-$CH_2$-O-

bedeutet, zur Herstellung von Polyurethanschäumen.

**2.** Verwendung von Schaumstabilisatoren wie in Anspruch 1 definiert zur Herstellung von Polyurethan-Hartschäumen.

**3.** Verwendung von Schaumstabilisatoren wie in Anspruch 1 definiert zur Herstellung von Polyesterpolyurethanschäumen.

**4.** Verwendung von Schaumstabilisatoren wie in Anspruch 1 definiert zu r H erstellung von Polyurethanheißweichschäumen.

**5.** Verwendung von Schaumstabilisatoren wie in Anspruch 1 definiert zur Herstellung von HR-Polyurethanschäumen.

**6.** Verwendung von Schaumstabilisatoren wie in Anspruch 1 definiert in Mischungen mit konventionellen, auf Basis von petrochemischen Rohstoffen hergestellten, Schaumstabilisatoren.

**7.** Verwendung von Schaumstabilisatoren wie in Anspruch 1 definiert zur Herstellung von Polyurethanschäumen in Kombinationen mit Aminkatalysatoren, Metallkatalysatoren, Puffersubstanzen, Vernetzern, Emulgatoren, Flammschutzmitteln, Antioxidantien, Antistatika, Bioziden, Farbpasten und festen Füllstoffen.

## Claims

**1.** Use of foam stabilizers of the general formula (I)

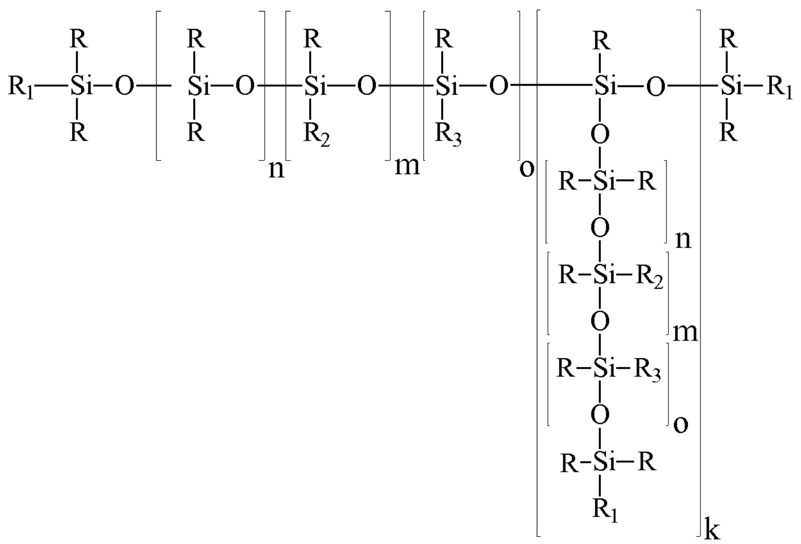

( I )

in which

nis 0-500,
mis 1-60,
ois 0-60,
kis 0-10,
R may be a linear, cyclic or branched, aliphatic or aromatic, saturated or unsaturated hydrocarbon radical having 1 to 20 C atoms, which may contain heteroatoms, such as oxygen, nitrogen, phosphorus or sulphur,
$R_1$ is R, $R_2$ or $R_3$,
$R_2$ is $CH_2$-$CH_2$-$CH_2$-O-($CH_2$-$CH_2$O-)$_{x'}$-($CH_2$-CH(R'')O-)$_y$- C(O)R', in which R' represents the alkyl radical derived from monobasic fatty acids based on natural vegetable or animal oils having 6-30 carbon atoms, in particular having 8-22 carbon atoms, such as caproic acid, caprylic acid, capric acid, lauric acid, myristic acid, palmitic acid, palmitoleic acid, isostearic acid, stearic acid, 12-hydroxystearic acid, dihydroxystearic acid, oleic acid, linoleic acid, petroselinic acid, elaidic acid, arachidic acid, behenic acid, erucic acid, gadoleic acid, linolenic acid, eicosapentaenoic acid, docosahexaenoic acid, arachidonic acid, which can be used alone or as a mixture,
$R_3$ is $CH_2$-$CH_2$-$CH_2$-O-($CH_2$-$CH_2$O-)$_x$-($CH_2$-CH(R'')O-)$_y$- R''', $CH_2$-$CH_2$-O-($CH_2$-$CH_2$O-)$_x$-($CH_2$-CH(R'')O-)$_y$-R''', $CH_2$-$CH_2$-$CH_2$-O-($CH_2$-$CH_2$O-)$_x$-($CH_2$- CH(R'')O-)$_y$-(SO)$_z$-R''', $CH_2$-$R^{IV}$, $CH_2$-$CH_2$-(O)$_{x'}$-$R^{IV}$, $CH_2$-$CH_2$-$CH_2$-O-$CH_2$-CH(OH)-$CH_2$OH,

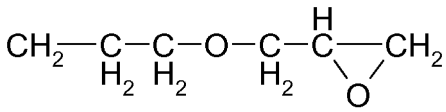
,

in $CH_2$-$CH_2$-$CH_2$-O-$CH_2$-C($CH_2$OH)$_2$-$CH_2$-$CH_3$, which
x is 0 to 100,
x' is 0 or 1,
y is 0 to 100,
z is 0 to 100,
R'' is an optionally substituted alkyl group having 1 to 4 C atoms and
R''' denotes a hydrogen radical or an alkyl group having 1 to 4 C atoms, the group -C(O)-R'', an alkylaryl group, such as the benzyl group; the group -C(O)NH-R',
$R^{IV}$ denotes an optionally substituted, optionally halogen-substituted, hydrocarbon radical having 1 to 50 C atoms.

SOdenotes the radical -CH($C_6H_5$)-$CH_2$-O-,
for the preparation of polyurethane foams.

**2.** Use of foam stabilizers as defined in Claim 1 for the preparation of rigid polyurethane foams.

**3.** Use of foam stabilizers as defined in Claim 1 for the preparation of polyester-polyurethane foams.

**4.** Use of foam stabilizers as defined in Claim 1 for the preparation of hot flexible polyurethane foams.

**5.** Use of foam stabilizers as defined in Claim 1 for the preparation of HR polyurethane foams.

**6.** Use of foam stabilizers as defined in Claim 1 in mixtures with conventional foam stabilizers prepared on the basis of petrochemical raw materials.

**7.** Use of foam stabilizers as defined in Claim 1 for the preparation of polyurethane foams in combinations with amine catalysts, metal catalysts, buffer substances, crosslinking agents, emulsifiers, flameproofing agents, antioxidants, antistatic agents, biocides, colour pastes and solid fillers.

**Revendications**

**1.** Utilisation de stabilisants de mousses, de formule générale (I)

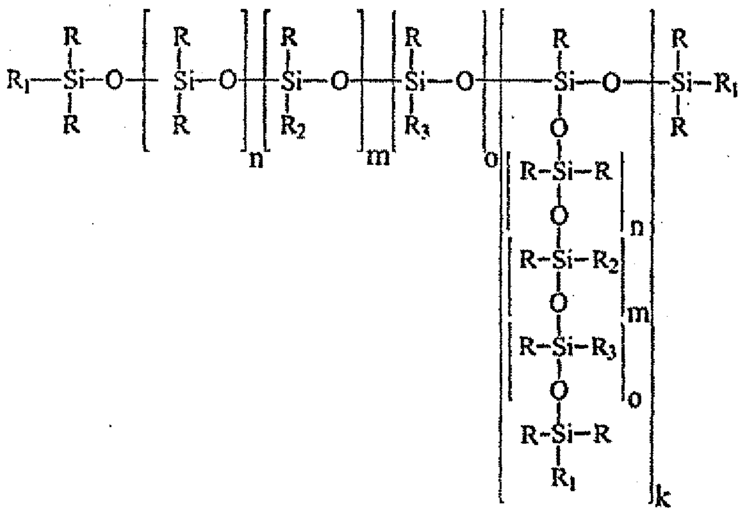 (I)

dans laquelle

n vaut 0-500,
m vaut 1-60,
o vaut 0-60,
k vaut 0-10,
R est un radical hydrocarboné linéaire, cyclique ou ramifié, aliphatique ou aromatique, saturé ou insaturé ayant de 1 à 20 atomes de carbone, qui peut contenir des hétéroatomes tels que des atomes d'oxygène, d'azote, de phosphore ou de soufre,
$R_1$ est R, $R_2$ ou $R_3$,
$R_2$ est $CH_2$-$CH_2$-$CH_2$-O-($CH_2$-$CH_2$O-)$_x$-($CH_2$-CH(R'')O-)$_y$-C(O)R', où R' représente le reste alkyle dérivé d'acides gras monobasiques provenant d'huiles naturelles végétales ou animales, ayant 6-30 atomes de carbone, en particulier ayant 8-22 atomes de carbone, tels que l'acide caproïque, l'acide caprylique, l'acide caprique, l'acide laurique, l'acide myristique, l'acide palmitique, l'acide palmitoléique, l'acide isostéarique, l'acide stéarique, l'acide 12-hydroxystéarique, l'acide dihydroxystéarique, l'acide oléique, l'acide linoléique, l'acide pétrosélinique, l'acide élaïdique, l'acide arachidique, l'acide béhénique, l'acide érucique, l' acide gadoléique, l'acide linolénique, l'acide eicosapentaénoïque, l'acide docosahexaénoïque, l'acide arachidonique, qui peuvent être utilisés seuls ou en mélange, $R_3$ est $CH_2$-$CH_2$-$CH_2$-O-($CH_2$-$CH_2$O-)$_x$-($CH_2$-CH(R'')O-)$_y$-R''', $CH_2$-$CH_2$-O-($CH_2$-$CH_2$O-)$_x$-($CH_2$-CH(R'')O-)$_y$-R''', $CH_2$-$CH_2$-$CH_2$-O-($CH_2$-$CH_2$O-)$_x$-($CH_2$- CH(R'')O-)$_y$-(SO)$_z$-R''', $CH_2$-$R^{IV}$, $CH_2$-$CH_2$-(O)$_{x'}$-$R^{IV}$, $CH_2$-$CH_2$-$CH_2$-O-$CH_2$-CH (OH)-$CH_2$OH,

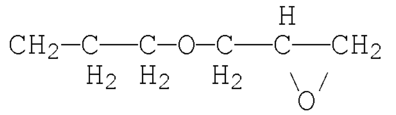 ,

où $CH_2$-$CH_2$-$CH_2$-O-$CH_2$-C($CH_2$OH)$_2$-$CH_2$-$CH_3$,
x vaut 0 à 100,
x' vaut 0 ou 1,
y vaut 0 à 100,
z vaut 0 à 100,
R'' est un groupe alkyle éventuellement substitué, ayant de 1 à 4 atomes de carbone et
R''' représente un atome d'hydrogène ou un groupe alkyle ayant de 1 à 4 atomes de carbone, le groupe -C (O)-R'', un groupe alkylaryle, tel que le groupe benzyle ; le groupe -C(O)NH-R',
$R^{IV}$ représente un radical hydrocarboné éventuellement substitué, éventuellement substitué par des atomes d'halogène, ayant de 1 à 50 atomes de carbone,

SO représente le radical $-CH(C_6H_5)-CH_2-O-$pour la production de mousses de polyuréthanne.

2. Utilisation de stabilisants de mousses tels que définis dans la revendication 1, pour la production de mousses rigides de polyuréthanne.

3. Utilisation de stabilisants de mousses tels que définis dans la revendication 1, pour la production de mousses de polyester-polyuréthanne.

4. Utilisation de stabilisants de mousses tels que définis dans la revendication 1, pour la production de mousses souples à chaud de polyuréthanne.

5. Utilisation de stabilisants de mousses tels que définis dans la revendication 1, pour la production de mousses de polyuréthanne HR.

6. Utilisation de stabilisants de mousses tels que définis dans la revendication 1, dans des mélanges avec des stabilisants de mousses traditionnels, préparés à base de matières premières pétrochimiques.

7. Utilisation de stabilisants de mousses tels que définis dans la revendication 1, pour la production de mousses de polyuréthanne en association avec des catalyseurs de type amine, des catalyseurs métalliques, des substances tampons, des agents de réticulation, des émulsifiants, des agents ignifuges, des antioxydants, des agents antistatiques, des biocides, des pâtes colorantes et des charges solides.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005033167 A2
- US 20060293400 A1
- EP 0570174 A1
- EP 0533202 A1
- EP 1544235 A1
- EP 0797606 A1
- EP 1501889 A1
- EP 0694585 A2
- EP 0930324 A1
- US 3560544 A1
- EP 0220697 A2
- US 5248783 A1
- WO 1988002383 A1
- JP 07070430 B
- JP 07070550 B
- US 20070021578 A1
- EP 1816154 A1
- EP 0585771 A2
- EP 1439200 B1
- US 5877268 A
- EP 0048984 A